# FASCICULE DE BREVET EUROPEEN

(11) **EP 4 201 498 B1**
(45) Date de publication et mention de la délivrance du brevet: **26.11.2025**
(21) Numéro de dépôt: 22214523.7
(22) Date de dépôt: 19.12.2022
(51) Int. Cl.: B01D 11/04

(54) **PROCEDE D'EXTRACTION LIQUIDE-LIQUIDE A CONTRE-COURANT DANS UN CONDUIT SUBMILLIMETRIQUE**
VERFAHREN ZUR GEGENSTROM-FLÜSSIG-EXTRAKTION IN EINEM SUBMILLIMETERKANAL
METHOD FOR COUNTER-CURRENT LIQUID-LIQUID EXTRACTION IN A SUBMILLIMETRIC CONDUIT

(30) Priorité: 22.12.2021 FR 2114216
(43) Date de publication de la demande: 28.06.2023
(73) Titulaire: Commissariat à l'Energie Atomique et aux Energies Alternatives, 75015 Paris (FR)
(72) Inventeur: MAGNALDO, Alastair, 30330 CONNAUX (FR)
(74) Mandataire: Gevers & Orès

(56) Documents cités:
- EP-A1- 3 744 851
- ABOLHASANI MILAD ET AL: "Multiphase Oscillatory Flow Strategy for in Situ Measurement and Screening of Partition Coefficients", ANALYTICAL CHEMISTRY, vol. 87, no. 21, 3 November 2015 (2015-11-03), US, pages 11130 - 11136, XP055947592, ISSN: 0003-2700, DOI: 10.1021/acs.analchem.5b03311
- MILAD ABOLHASANI ET AL: "Oscillatory multiphase flow strategy for chemistry and biology", LAB ON A CHIP, vol. 16, no. 15, 1 January 2016 (2016-01-01), UK, pages 2775 - 2784, XP055708010, ISSN: 1473-0197, DOI: 10.1039/C6LC00728G
- CONG XU ET AL: "Review of Microfluidic Liquid?Liquid Extractors", INDUSTRIAL & ENGINEERING CHEMISTRY RESEARCH, vol. 56, no. 27, 28 June 2017 (2017-06-28), pages 7593 - 7622, XP055620539, ISSN: 0888-5885, DOI: 10.1021/acs.iecr.7b01712
- NANDAGOPAL M S ET AL: "Comparative study of liquid-liquid extraction in miniaturized channels over other conventional extraction methods", MICROSYSTEM TECHNOLOGIES, BERLIN, DE, vol. 22, no. 2, 13 December 2014 (2014-12-13), pages 349 - 356, XP035886121, ISSN: 0946-7076, [retrieved on 20141213], DOI: 10.1007/S00542-014-2391-5
- MILAD ABOLHASANI ET AL: "Oscillatory three-phase flow reactor for studies of bi-phasic catalytic reactions", CHEMICAL COMMUNICATIONS, vol. 51, no. 43, 1 January 2015 (2015-01-01), UK, pages 8916 - 8919, XP055374495, ISSN: 1359-7345, DOI: 10.1039/C5CC02051D

## Description

### Domaine technique de l'invention

La présente invention se rapporte au domaine de l'extraction liquide-liquide.

L'extraction liquide-liquide est un procédé consistant à mettre en contact deux phases liquides non ou peu miscibles de sorte à permettre un échange massique d'un composant d'une phase vers l'autre.

### Résumé de l'invention

Il existe de nombreux procédés d'extraction liquide-liquide. On pourra par exemple se référer à l'article C. Xu et T. Xie, « Review of Microfluidic Liquid-Liquid Extractors », Ind. Eng. Chem. Reas., vol. 56, n°27, pp. 7593-7622 (2017), doi :10.2021/acs.iecr.7b01712 (PA1), qui référence plusieurs des techniques proposées à ce jour.

Parmi ceux-ci, les procédés d'extraction liquide-liquide mettant à profit un conduit submillimétrique dans lequel l'extraction peut s'effectuer, sont particulièrement recherchés.

Par conduit « submillimétrique », il convient de comprendre un conduit présentant deux dimensions n'excédant pas le millimètre. Le plus souvent, ce conduit présente une section circulaire, mais l'invention peut s'appliquer à d'autres formes de sections, par exemple des sections carrés.

En effet, la miniaturisation d'un procédé d'extraction liquide-liquide dans un conduit submillimétrique présente plusieurs intérêts.

Un premier intérêt réside dans la diminution des volumes de liquide mis en jeu. Ceci est notamment vrai lorsque les liquides concernés sont dangereux ou rares et coûteux. C'est par exemple le cas pour des liquides comportant un composant à extraire qui est radiochimique, ce que l'on peut rencontrer pour des applications médicales ou pharmaceutiques. Par ailleurs, en cas de perte de liquide dans l'environnement, les volumes impliqués diminuent grandement les risques.

Un deuxième intérêt réside dans le confinement permanent des liquides au sein du conduit. Ce confinement est bien entendu bienvenu pour des liquides dangereux, par exemple à composant radiochimique. Le risque de perte de liquide est également restreint. De plus, le confinement implique une manipulation aisée des éléments de liquide, permettant une automatisation simplifiée.

Enfin, un troisième intérêt réside dans l'atteinte de performances d'extraction difficilement possibles à plus grande échelle. En effet, la miniaturisation permet de manière générale d'augmenter les densités de flux de matière extraites d'une phase liquide à l'autre, du fait du rapport plus élevé entre la surface d'échange entre les deux phases liquide au regard du volume occupé par chaque phase liquide.

Il existe ensuite deux grandes approches pour assurer une extraction de composant entre deux phases liquides non miscibles dans un conduit submillimétrique.

La première approche consiste à faire circuler les deux phases liquides en co-courant (même sens).

**PA1** référence plusieurs techniques proposées en co-courant, parmi lesquelles des techniques mettant en œuvre un conduit submillimétrique. En co-courant, un échange liquide-liquide ne peut pas dépasser l'efficacité d'extraction d'un étage de contact entre liquides et donc l'extraction est généralement peu quantitative. Une technique fonctionnant en co-courant néanmoins efficace est plus amplement présentée dans J.R. Burns et C. Radshaw, « The intensification of rapid reactions in multiphase systems using flow in capillaries », Lab Chip, 2001, doi :10.1039/b102818a (PA2). Elle consiste à employer un train de gouttes de deux phases liquides non miscibles, mais mouillant toutes intégralement le conduit submillimétrique. On a ainsi une alternance d'une goutte d'une phase liquide et d'une goutte de l'autre phase liquide et ainsi de suite le long du conduit. Le train de gouttes peut être généré en faisant en sorte que les deux phases liquides se rencontrent au niveau d'un Té en amont du conduit.

La deuxième approche consiste à faire circuler les deux phases liquides en contre-courant (sens opposés). En contre-courant, on a l'avantage de pouvoir mettre en contact les liquides selon plusieurs étages d'extraction résultant en un transfert quantitatif d'une phase liquide vers l'autre.

Différentes techniques ont été proposées pour mettre en œuvre cette approche à contre-courant, lesquelles sont bien présentées dans la revue **PA1.** On trouve notamment les procédés d'extraction liquide-liquide à contre-courant a) multi-étagés discontinus et b) continus.

Les procédés a) multi-étagés discontinus sont particulièrement complexes à mettre en œuvre, soit en raison des montages qu'ils nécessitent, soit parce qu'ils impliquent des procédés physico-chimiques délicats à mettre en œuvre pour séparer les deux phases liquides à l'issue de leur contact, et ceci pour chaque étage. L'extraction s'effectue généralement de manière discontinue, entre deux étages.

Les procédés b) continus nécessitent de maintenir en permanence une séparation entre les deux phases. La façon d'opérer la plus courante est de mettre en œuvre une membrane (solide) de séparation entre les deux phases liquides circulant à contre-courant. Outre la simplicité du montage associé, le confinement de chacune des deux phases liquides est donc nettement plus simple qu'avec les procédés multi-étagés discontinus. Dans un procédé membranaire, un des paramètres de contrôle est la taille des pores de la membrane par lesquelles l'extraction d'un composant d'une phase liquide vers l'autre peut avoir lieu (transfert de masse).

Ces procédés membranaires souffrent toutefois de plusieurs inconvénients :
- la limitation de la différence de pression de part et d'autre de la membrane, au risque de mettre en cause l'intégrité mécanique de la membrane ;
- la limitation du transfert de masse à travers la membrane (résistance apportée par la tailles des pores, l'épaisseur et la tortuosité de la membrane, mais aussi la couche limite de diffusion de part et d'autre de chacune des faces de la membrane).

Il est donc difficile de concevoir une membrane suffisamment épaisse (pour résister à la différence de pression), tout en assurant un transfert de masse optimal d'une phase liquide à l'autre. La miniaturisation du dispositif pour mettre en œuvre un procédé d'extraction liquide-liquide à contre-courant membranaire présente donc des limites physiques intrinsèques, qui s'accompagnent de pertes de performances pour le procédé d'extraction.

Il existe d'autres techniques basées sur un procédé d'extraction liquide-liquide à contre-courant fonctionnant en continu. Parmi celles-ci, on trouve notamment les procédés de chromatographie à contre-courant. Ici, la séparation des phases liquides est maintenue tout au long de l'extraction par un champ d'accélération radial (force centrifuge) appliqué à un conduit millimétrique enroulé autour d'une spire. On joue sur la différence de densité massique entre les deux phases liquides pour assurer la séparation, la force centrifuge subie par chacun des deux phases liquides n'étant pas la même. On pourra par exemple se référer à Y. Ito & R.L. Bowman, « Countercurrent chromatography with flow-through coil planet centrifuge », Science, vol. 173, n° 3995, pp. 420-422, Jul. 1971, doi.10.1126/science.173.3995.420 (PA3). Cette approche n'est cependant pas très propice à la miniaturisation, l'effet de séparation étant de moins en moins aisé à obtenir avec la miniaturisation. Selon une approche similaire, on ne met pas en œuvre une force centrifuge pour assurer la séparation des phases liquides, mais un champ gravitaire. Mais là également, en dessous d'une certaine dimension, la séparation des phases liquides n'est plus effective. Les pertes de performances du procédé d'extraction liquide-liquide deviennent alors importantes.

L'article de Milad Abolhasani & al. «Multiphase Oscillatory Flow Strategy for in Situ Measurement and Screening of Partition Coefficients», (Analytical Chemistry, vol. 87, no. 21, p.11130) divulgue par exemple un procédé d'extraction liquide-liquide à contre-courant dans un conduit.

Un objectif de l'invention est de proposer un procédé d'extraction liquide-liquide à contre-courant dans un conduit submillimétrique avec des performances améliorées. Pour cela, l'invention propose un procédé d'extraction liquide-liquide à contre-courant dans un conduit submillimétrique, le procédé comprenant les étapes suivantes mises en œuvre à partir d'un train de gouttes liquides initial dans le conduit, ledit train étant composé d'une alternance de gouttes d'un premier liquide et de gouttes d'un deuxième liquide moins mouillant que le premier liquide et non miscible avec le premier liquide, l'un des deux liquides comportant un composant à extraire vers l'autre des deux liquides :
a) appliquer un premier gradient de pression le long du conduit de sorte à générer un écoulement visco-inertiel déplaçant un premier volume de train de gouttes selon ledit premier gradient et générant un film de premier liquide s'étant déplacé selon le sens opposé audit premier gradient, le film étant situé entre les gouttes de deuxième liquide et le conduit ;
b) stopper l'application du premier gradient de pression ;
c) appliquer un deuxième gradient de pression le long du conduit, en sens opposé au premier gradient de pression appliqué à l'étape a) de sorte à générer un écoulement visco-capillaire déplaçant un deuxième volume de train de gouttes selon ledit deuxième gradient ; et
d) stopper l'application du deuxième gradient de pression

Le procédé selon l'invention pourra aussi comprendre d'autres caractéristiques, parmi lesquelles les caractéristiques suivantes, prises seules ou en combinaison :
- on débute l'étape d) lorsque le deuxième volume de train de gouttes déplacé pendant l'étape c) égale le premier volume de train de gouttes déplacé pendant l'étape a) ;
- on répète N₁ fois les étapes a) à d), avec N₁ un entier naturel supérieur ou égal à l'unité ;
- le train de gouttes est régulier ;
- à l'issue de l'étape d), les étapes a) à d) ayant été répétées avantageusement N₁ fois, un volume de premier liquide est localisé à l'une des extrémités du conduit, et le procédé comprend alors les étapes suivantes :
   A) soutirer du conduit le volume de premier liquide par l'extrémité de conduit où ledit volume est localisé ;
   B) générer un train de gouttes liquides dans le conduit par l'extrémité de conduit par laquelle le volume de premier liquide a été soutiré à l'étape A), ledit train étant composé d'une alternance d'une goutte du premier liquide et d'une goutte du deuxième liquide ;
- à l'issue de l'étape B), il comprend une étape C) consistant à mettre en œuvre les étapes a) à d) ;
- on répète N₂ fois l'étape C), avec N₂ un entier naturel supérieur ou égal à l'unité ;
- on répète N₃ fois les étapes A) et B), avec N₃ un entier naturel supérieur ou égal à l'unité ;
- le train de gouttes généré à l'étape B) est régulier ;
- un rapport entre une vitesse moyenne de l'écoulement visco-inertiel de l'étape a) et une vitesse moyenne de l'écoulement visco-capillaire de l'étape c) est compris entre 2,5 et 4.

### Brève description des figures

D'autres caractéristiques et avantages de l'invention apparaitront au cours de la lecture de la description détaillée qui va suivre pour la compréhension de laquelle on se reportera aux dessins annexés et pour lesquels :
La [Fig. 1] représente un schéma simplifié d'un dispositif susceptible de mettre en œuvre un procédé d'extraction liquide-liquide conforme à l'invention ;
La [Fig. 2] représente un conduit submillimétrique comportant un train de gouttes de liquides, formé d'une alternance d'une goutte de premier liquide et de deuxième liquide moins mouillant que le premier liquide et non miscible avec le premier liquide, à partir duquel le procédé conforme à l'invention est mis en œuvre ;
La [Fig. 3], qui comporte 4 schémas, représente une période d'oscillation, à savoir les déplacements respectifs, à contre-courant, des gouttes de premier liquide et des gouttes de deuxième liquide, au cours de la mise en œuvre du procédé selon l'invention ;
La [Fig. 4], qui comporte 3 schémas, représente l'évolution au cours de la mise en œuvre répétée de plusieurs périodes d'oscillation selon les schémas successifs de la figure 3, du train de gouttes initial représenté sur la figure 2 ;
La [Fig. 5], qui comporte 3 schémas, représente d'autres étapes du procédé selon l'invention visant à générer un nouveau train de gouttes de liquides formé d'une alternance d'une goutte de premier liquide et d'une goutte de deuxième liquide ;
La [Fig. 6] est un schéma simplifié d'un dispositif concrètement réalisé pour mettre en œuvre le procédé conforme à l'invention.

### Description détaillée de l'invention

L'invention propose un procédé d'extraction liquide-liquide à contre-courant dans un conduit submillimétrique.

On part d'une situation dans laquelle un train de gouttes liquides est prévu dans le conduit, ledit train étant composé d'une alternance de gouttes d'un premier liquide LM et d'un deuxième liquide LNM moins mouillant que le premier liquide et non miscible avec le premier liquide, l'un des deux liquides comportant par ailleurs un composant à extraire vers l'autre des deux liquides.

Le procédé selon l'invention vise alors à mettre en œuvre les étapes suivantes :
a) appliquer un premier gradient de pression le long du conduit de sorte à générer un écoulement visco-inertiel déplaçant un premier volume de train de gouttes selon ledit premier gradient et générant un film de premier liquide s'étant déplacé selon le sens opposé audit premier gradient, le film étant situé entre les gouttes de deuxième liquide et le conduit ;
b) stopper l'application du premier gradient de pression ;
c) appliquer un deuxième gradient de pression le long du conduit, en sens opposé au premier gradient de pression appliqué à l'étape b) de sorte à générer un écoulement visco-capillaire déplaçant un deuxième volume de train de gouttes selon ledit deuxième gradient ; et
d) stopper l'application du deuxième gradient de pression.

La mise en œuvre des étapes a) à d) définit une période d'oscillation.

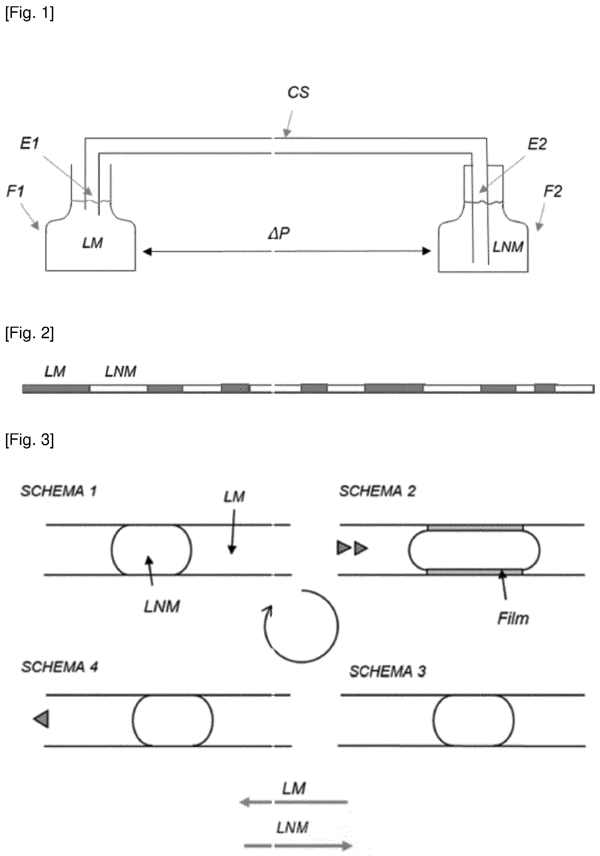

On peut mieux le comprendre à l'appui des figures 1 à 3.

Sur la figure 1, on a représenté un dispositif susceptible de mettre en œuvre le procédé décrit ci-dessus. Sur la figure 2, on a représenté la situation de départ avec le train de gouttes des deux phases liquides concernées. Enfin, sur la figure 3, on a représenté les phénomènes physiques mis en jeu pour expliquer le déplacement à contre-courant des deux phases liquides présentes dans le conduit submillimétrique avec la mise en œuvre des étapes du procédé selon l'invention.

Sur la figure 1, on a représenté une première fiole F1, ouverte, contenant le premier liquide LM et une deuxième fiole F2, fermée, contenant le deuxième liquide LNM. Les deux fioles F1, F2 sont reliées par un conduit submillimétrique CS dont les extrémités E1, E2 baignent respectivement dans le premier liquide LM de la première fiole F1 et le deuxième liquide LNM de la deuxième fiole F2. Le fait que la deuxième fiole F2 soit fermée permet d'y contrôler la pression par tout moyen adapté (non représenté), la première fiole F1, quant à elle ouverte restant à la pression ambiante (atmosphérique). Un gradient de pression peut donc être appliqué le long du conduit submillimétrique.

Dans la situation de départ, à savoir avant de mettre en œuvre le procédé selon l'invention tel que décrit ci-dessus, on part de la situation représentée sur la figure 2.

Ce train de gouttes peut être obtenu à l'aide deux réservoirs (non représentés sur la figure 1), l'un pour le premier liquide LM et l'autre pour le deuxième liquide LNM, chaque réservoir étant relié par un capillaire à une entrée d'un Té dont la sortie débouche dans le conduit submillimétrique. Dans la situation initiale, on a donc une alternance d'une goutte du premier liquide et d'une goutte du deuxième liquide sur le long du conduit submillimétrique CS.

Comme on peut le constater sur la figure 2, le train de gouttes initial n'est pas nécessairement régulier, ni les volumes des gouttes égaux. En effet, afin d'effectuer l'opération d'échange liquide-liquide, il est possible d'injecter dans le conduit submillimétrique CS un rapport souhaité, nommé α, entre le débit moyen Q_{LM} de premier liquide et le débit moyen Q_{LNM} de deuxième liquide. Ce rapport s'écrit donc α = Q_{LM}/Q_{LNM}. Selon ce rapport α notamment , on aura un train de gouttes plus ou moins régulier. Un train régulier est toutefois avantageux pour ne pas trop dégrader les performances.

Le schéma 1 de la figure 3 est une vue agrandie de la figure 2 au niveau d'une goutte de deuxième liquide. On y observe donc une seule goutte de deuxième liquide LNM, de part et d'autre de laquelle se situe une goutte de premier liquide LM. Chaque goutte de liquide, à l'arrêt, se trouve au contact de la paroi interne du conduit submillimétrique CS et il existe une interface entre la goutte de deuxième liquide LNM et chaque goutte de premier liquide LM, sous l'effet de la tension de surface (les liquides sont non miscibles).

A partir de cette situation, on met en œuvre l'étape a).

Pour cela, on fait en sorte que la pression dans la deuxième fiole F2 soit inférieure à la pression dans la première fiole F1. Le gradient de pression ainsi généré pousse alors l'ensemble du train de gouttes en direction de la deuxième fiole F2. Un premier volume de train de gouttes est donc déplacé selon le sens du gradient de pression appliqué pendant cette étape (à savoir de la gauche vers la droite, comme l'indique la double flèche du schéma 2 de la figure 3). La différence de pression doit être suffisamment importante pour générer une avancée dans un régime d'écoulement visco-inertiel. Dans ce régime d'écoulement, les forces visqueuses et les forces inertielles (accélération) sont importantes sous l'effet de la vitesse engendrée par le gradient de pression. Les forces de tension superficielles (capillaires), notamment avec la paroi interne du conduit submillimétrique CS (qui, quant à elles, ne subissent pas de modifications avec la vitesse de l'écoulement) sont alors négligeables devant les forces visqueuses et inertielles. Dans ce régime d'écoulement, une goutte de deuxième liquide LNM a alors tendance à s'allonger et à s'écarter de la paroi interne du conduit submillimétrique et un film de premier liquide vient alors s'insérer entre la goutte de deuxième liquide et la paroi interne du conduit submillimétrique CS. Le premier liquide LM formant le film provient quant à lui de la goutte de premier liquide située à la droite de la goutte de deuxième liquide LNM. Le premier liquide alimentant le film se déplace donc à l'opposé du gradient de pression appliqué pendant cette étape a). Pour autant, il y a bien un déplacement d'ensemble des gouttes de premier liquide et des gouttes de deuxième liquide dans le sens du gradient de pression appliqué pendant cette étape a).

A l'étape b), on stoppe alors l'application de ce gradient de pression.

On observe alors sur le schéma 3 de la figure 3 une relaxation où la goutte de deuxième liquide LNM vient recoller à la paroi interne du conduit submillimétrique CS.

Ce phénomène de recollement implique aussi que le premier liquide du film est chassé vers la gauche, provoquant la disparition du film. La situation est alors comparable à la situation de départ, sauf que le train de gouttes dans son ensemble et donc en particulier la goutte de deuxième liquide s'est déplacée dans le sens du gradient appliqué à l'étape a) et que du premier liquide s'est déplacé depuis la goutte de premier liquide LM située à droite de la goutte de deuxième liquide LNM vers la goutte de premier liquide située à gauche de la goutte de premier liquide.

Il y a donc eu un échange relatif entre le premier liquide et le deuxième liquide.

A ce stade cependant, l'ensemble du volume de liquide (à savoir l'ensemble du train de gouttes) présent dans le conduit submillimétrique s'est déplacé vers la droite, en direction de la fiole F2.

A l'étape c), on applique alors un gradient de pression entre les deux fioles F1, F2 qui est opposé au gradient de pression appliqué à l'étape a). Ceci peut s'effectuer en augmentant la pression au niveau de la deuxième fiole F2. Par ailleurs, le gradient de pression appliquée au cours de cette étape c) est plus faible (en valeur absolue) que celui appliqué au cours de l'étape a) afin que le régime d'écoulement soit un régime visco-capillaire (vitesse d'écoulement, en valeur absolue, plus faible que pour l'étape a). Dans ce régime d'écoulement, les forces prépondérantes sont les forces visqueuses et les forces de tension superficielles (capillaires). Les forces inertielles sont quant à elles négligeables. Ce régime d'écoulement a pour effet de déplacer les gouttes de premier liquide et les gouttes de liquide deuxième liquide dans la direction imposée par le gradient de pression, à savoir de la droite vers la gauche en direction de la première fiole F1. Cette fois, la portion de premier liquide susceptible d'être retenue sur la paroi du capillaire est très faible (en pratique négligeable). C'est ce que l'on observe sur le schéma 4 de la figure 3.

L'étape c) rend effectif le mouvement général de contre-courant entre les deux phases liquides. Ce mouvement de contre-courant peut être plus ou moins important.

On stoppe ensuite à l'étape d) l'application de ce gradient.

A la fin de l'étape d), on se retrouve alors dans une situation similaire à la situation de départ (schéma 1 de la figure 3), sauf que les gouttes de deuxième liquide se sont déplacées vers la droite et les gouttes de premier liquide se sont déplacées vers la gauche.

Avantageusement, l'étape d) est mise en œuvre lorsque le deuxième volume de train de gouttes déplacé pendant l'étape c) égale le premier volume de train de gouttes déplacé pendant l'étape a). Ceci implique que le volume de train de gouttes finalement déplacé est à somme nulle. Il y a alors eu un déplacement à contre-courant total entre les deux phases liquides, à savoir sans mouvement d'ensemble du train de gouttes initial (initial = schéma 1 de la figure 3).

Les performances de ce procédé d'extraction liquide-liquide sont très intéressantes.

Ceci est lié d'une part, à la grande surface d'échange disponible entre les deux phases liquides que le procédé met en œuvre, *ab initio*, avec le train de gouttes de départ et d'autre part au fait qu'une interface stable entre les deux phases liquide (premier liquide et deuxième liquide moins mouillant) est maintenue pendant la mise en œuvre des étapes a) à d). Cette stabilité est en particulier liée au contrôle de la pression (gradient de pression essentiellement longitudinal) qui est sensiblement la même au niveau d'une section donnée du conduit submillimétrique et donc d'une interface premier liquide/deuxième liquide au niveau de cette section. Le gradient de pression appliqué permet aussi d'assurer le déplacement à contre-courant des deux phases liquides pour assurer l'extraction souhaitée.

Le procédé selon l'invention est particulièrement propice à la miniaturisation du dispositif pour le mettre en œuvre. En effet, la miniaturisation du conduit submillimétrique (ce qui peut impliquer des forces visqueuses et capillaires plus importantes) peut être compensée par le gradient de pression appliqué au cours de procédé pour obtenir le fonctionnement précité (régime visco-inertiel puis régime visco-capillaire), sans remettre en cause l'efficacité du procédé d'extraction, bien au contraire. En effet, toutes choses égales par ailleurs, la miniaturisation permet d'augmenter le rapport surface d'échange entre gouttes des deux phases liquide au regard de leurs volumes respectifs.

Le dispositif est par ailleurs relativement simple (pas de pièce mécanique en mouvement, pas de multi-étages, pas de membrane susceptible de subir des écarts de pression élevées au niveau de l'interface entre les deux phase liquide, etc..).

Avantageusement, on pourra répéter N₁ fois les étapes a) à d), avec N₁ un entier naturel supérieur ou égal à l'unité. Ceci permet, on le comprend, de faire avancer l'ensembles des gouttes de deuxième liquide vers la deuxième fiole F2 et l'ensemble des gouttes de premier liquide vers la première fiole F1.

Toutefois, en répétant les étapes a) à d) du procédé selon l'invention un certain nombre de fois, on peut constater que le train de gouttes a tendance à générer de grandes gouttes de liquide (que ce soit pour le premier liquide que pour le deuxième liquide), les plus petites gouttes ayant en effet tendance à s'agréger dans les plus grandes.

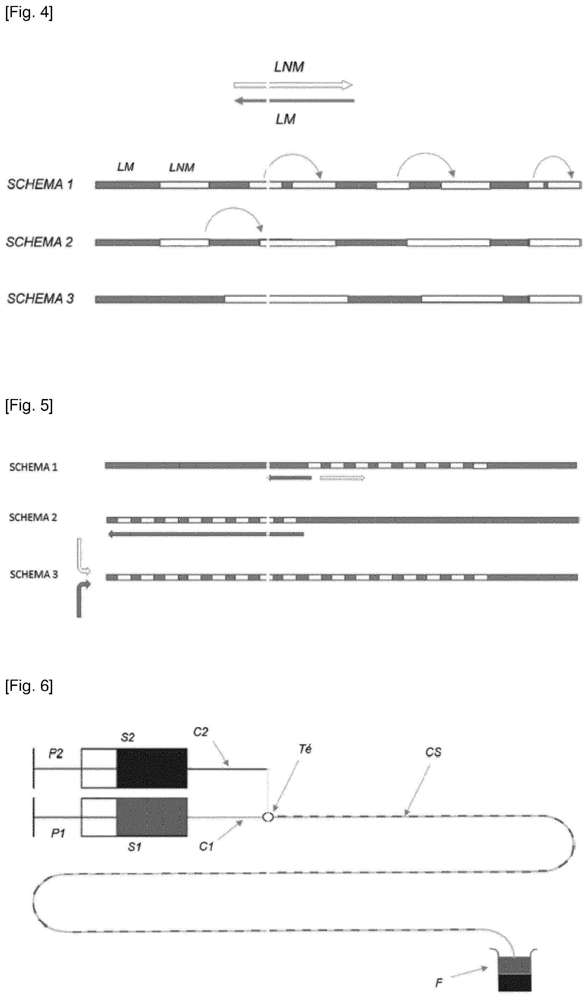

Cela peut être observé sur la figure 4.

On aboutit alors petit à petit à une situation où les gouttes deviennent de plus en plus grandes (schéma 1 vers le schéma 3 de la figure 4). Le schéma 3 de la figure 4 correspond à une situation particulièrement évoluée de ce phénomène.

Ainsi, en poursuivant ces oscillations, tout le deuxième liquide risque de se trouver à l'extrémité droite et le premier liquide à l'extrémité gauche sans présenter d'alternances. Ainsi le train de gouttes est progressivement détruit du fait des déplacements respectifs des deux liquides. Or, au vu de ce qui a été exposé précédemment, on comprend que c'est l'alternance des gouttes de premier liquide et de deuxième liquide dans un train de gouttes qui permet aux liquides de se déplacer à contre-courant.

Pour éviter cette situation, il convient de régénérer le train de gouttes, en particulier après un nombre N₁ donné de périodes d'oscillations.

A défaut, ceci peut avoir un impact sur les performances d'extraction du procédé puisque les surfaces de contact entre une goutte de premier liquide et de deuxième liquide ont tendance à diminuer (à supposer que l'extraction d'un composant d'une phase liquide à l'autre n'ait pu être quasi totalement effectué, par exemple dans la situation du schéma 3 de la figure 4). Surtout, cela peut avoir un impact sur le débit volumique de traitement du procédé, autrement dit sur la quantité de composant extrait par unité de temps par le procédé. En effet, on constate que ce débit est d'autant plus élevé que le train de gouttes est composé d'une multitude de petites gouttes, à savoir de gouttes de longueurs faibles.

De ce fait, il peut parfois s'avérer utile de s'assurer de rester dans une situation proche du schéma 1 de la figure 4, avant de mettre à nouveau en œuvre les étapes a) à d) du procédé d'extraction liquide-liquide selon l'invention.

Donc, à l'issue de l'étape d), les étapes a) à d) ayant été répétées avantageusement N₁ fois, un volume de premier liquide est localisé à l'une des extrémités du conduit.

Le procédé peut alors avantageusement comprendre les étapes additionnelles suivantes :
A) soutirer du conduit le volume de premier liquide par l'extrémité de conduit où ledit volume est localisé ;
B) générer un train de gouttes liquides dans le conduit par l'extrémité de conduit par laquelle le volume de premier liquide a été soutiré à l'étape A), ledit train étant composé d'une alternance d'une goutte du premier liquide LM et d'une goutte du deuxième liquide LNM.

Là également, le train de gouttes est avantageusement régulier, pour les raisons déjà mentionnées précédemment.

Ceci est expliqué à l'appui de la figure 5.

Sur cette figure, toujours en partant de la situation de la figure 2, on se retrouve après la mise en œuvre de N₁ répétitions des étapes a) à d) à la situation du schéma 1 de la figure 5, susceptible donc d'être celle du schéma 3 de la figure 4.

Dans ce cas, on soutire le volume de premier liquide du côté de la première fiole F1, c'est ce que montre le schéma 2 de la figure 5.

Ensuite, on génère un nouveau train de gouttes selon l'étape B), comme le montre le schéma 3 de la figure 5. Un nouveau train de gouttes, avec des gouttes de petites dimensions est alors injecté dans le conduit submillimétrique. Cela permet de se maintenir dans une situation optimale assurant un débit volumique de traitement optimal et une diminution du risque de pertes de performances du procédé d'extraction.

En ajustant le volume retiré à l'étape A) et les volumes respectifs des deux liquides réinjectés dans le conduit submillimétrique à l'étape B), on peut alors contrôler l'échange relatif des deux phases liquides (ou « hold-up » relatif des phases selon la terminologie anglo-saxonne).Autrement dit, on peut contrôler, dans le conduit submillimétrique, le rapport entre la magnitude des débits respectifs à contre-courant et le volume de chacune des phases liquides.

On rappelle que α = Q_{LM}/Q_{LNM} est le rapport du débit moyen de premier liquide sur le débit moyen de deuxième liquide. Notons *β* le rapport du volume de premier liquide sur le volume de deuxième liquide Notons V le volume de premier liquide soutiré à l'étape A), V_{LM} le volume de premier liquide injecté à l'étape B) et V_{LNM} le volume de deuxième liquide également injecté à l'étape B) pour générer le train de gouttes. On peut alors imposer un fonctionnement selon un rapport α donné tout en garantissant un rapport β donné. Plus précisément, on a V-V_{LM} = α*V_{LNM}, en imposant par ailleurs que β = V_{LM}/V_{LNM}.

Ainsi, le procédé permet d'extraire à contre-courant selon un rapport de débits des phases liquides donné et un rapport des volumes desdites phases liquide également donné.

On peut alors ajouter une étape C) consistant à mettre en œuvre les étapes a) à d).

Avantageusement, on pourra répéter N₂ fois l'étape C), avec N₂ un entier naturel supérieur ou égal à l'unité.

De manière similaire, si cela s'avère utile, on pourra répéter N₃ fois les étapes A) et B), avec N₃ un entier naturel supérieur ou égal à l'unité.

Nous allons maintenant présenter un exemple concret de mise en œuvre à l'appui de la figure 6. La figure 6 est une représentation en cours de procédé, à savoir ni à l'état initial ni à l'état final.

Toute la mise en œuvre peut être automatisée, et par ailleurs gérée à distance.

On prévoit un montage concret avec deux seringues S1, S2 dont l'une comprend un premier liquide et l'autre comprend un deuxième liquide. Le premier liquide est constitué d'un mélange d'ISANE 185 avec du tributylphosphate (TBP) à 30% en masse. Le deuxième liquide est constitué d'un mélange d'eau et d'acide nitrique, le mélange présentant une molarité 4M. Le deuxième liquide est moins mouillant que le premier liquide et les deux liquides sont non miscibles. Dans cet exemple, le composant à extraire d'une phase liquide à l'autre dans le procédé d'extraction liquide-liquide est l'acide nitrique, qui est donc initialement dans le deuxième liquide pour être extrait en direction du premier liquide. Les mélanges ainsi formés sont non miscibles. Chaque seringue comprend en sortie un capillaire C1, C2, les capillaires se rejoignant au niveau d'un Té de distribution débouchant dans un conduit submillimétrique CS. Le conduit submillimétrique CS est en l'occurrence réalisé en polytétrafluoroéthylène (PTFE), de section circulaire avec un diamètre interne de 750 µm et de longueur 1,8 m. Le conduit submillimétrique CS est posé à plat sur une table. A l'autre extrémité du conduit submillimétrique, on trouve une fiole F pour recueillir le liquide. Dans une variante de réalisation, on peut envisager d'enrouler le conduit submillimétrique sur un cylindre de diamètre supérieur à 2cm, cela fonctionne tout autant.

L'état initial est le suivant.

Le conduit submillimétrique CS est rempli de premier liquide. La seringue S1 qui est vide. La seringue S2 est remplie de 1mL de deuxième liquide. Les capillaires C1 et C2 sont remplis de leur liquide respectif. La fiole F est quant à elle remplie de premier liquide. L'extrémité du conduit submillimétrique CS trempe dans le premier liquide à l'interface entre l'air et la surface libre de premier liquide.

On aspire alors 46 µL de premier liquide dans la seringue S1 en tirant sur le piston P1 de la seringue S1.

On injecte ensuite un train de gouttes de premier liquide et de deuxième liquide.

Une fois le train de gouttes de premier liquide et goutte de deuxième liquide généré, on met alors en œuvre les étapes a) à d) du procédé.

L'étape a) est faite en sorte de générer un écoulement visco- inertiel avec une vitesse moyenne d'écoulement de 0,4m/s dans le conduit submillimétrique. Ceci s'effectue par une action de poussoir sur le piston P1 de la seringue S1 contenant le premier liquide, lequel applique une surpression au niveau du Té, par rapport à la pression au niveau de la fiole F. Et l'étape c) est faite en sorte de générer un écoulement visco-capillaire avec une vitesse moyenne d'écoulement de 0,04m/s dans le conduit submillimétrique. Ceci s'effectue par une action de tirage sur le piston P1 de la seringue S1. Ceci implique une dépression au niveau du Té par rapport à la pression au niveau de la fiole F. La durée de cette étape c) est 10 fois plus longue que la durée de l'étape a) de telle sorte qu'à l'issue d'une période d'oscillation, le volume total (premier liquide + deuxième liquide) injecté dans le conduit submillimétrique est à somme nulle.

Les étapes a) à d) sont mises en œuvre N₁ = 10 fois de suite.

A l'issue de ces 10 répétitions (ou 10 périodes d'oscillations), les gouttes de deuxième liquide avancent d'environ 15cm dans le conduit submillimétrique en direction de la fiole F (ce qui correspondant à un volume déplacé de 66 µL).

Ensuite, on met en œuvre les étapes A) et B) du procédé explicitées précédemment (cycle).

Ainsi, on soutire (étape A)) 64 µL de liquide mouillable du conduit submillimétrique CS depuis le Té, vers la seringue S1. Ceci est effectué à un débit de 15 µL/s.

Puis (étape B)), on injecte concomitamment 32 µL de deuxième liquide et 32 µL de premier liquide par le Té à un même débit de 5 µL/S pour chaque liquide, de sorte à obtenir un train de gouttes formé par une alternance régulière de gouttes de premier liquide et de deuxième liquide. Ceci s'effectue en appuyant sur les pistons P1, P2. Le rapport α, tel que défini précédemment, vaut ainsi α = 1 dans cet exemple.

Les étapes décrites ci-dessus ont ensuite été répétées selon 313 périodes d'oscillations (= N₁ + N₂) et selon N₃ = 31 cycles, de telle sorte que la fiole F est vidée de son premier liquide et remplie en conséquence intégralement de deuxième liquide.

La procédure décrite ci-dessus présente les caractéristiques suivantes :
- une performance d'extraction équivalente à celle d'un procédé d'extraction liquide-liquide à contre-courant de type multi-étagé de 3,2 étages théoriques sur 1,8m de conduit submillimétrique, et
- un débit moyen de 0,5 µL/s.

Nous allons maintenant présenter d'autres exemples concrets qui ont été mis en œuvre.

Dans l'exemple précédent, l'étape a) a été effectuée avec un écoulement de vitesse moyenne de 0,4 m/s dans le conduit submillimétrique et l'étape c) avec un écoulement de vitesse moyenne de 0,04 m/s, soit un rapport de 10, aux erreurs de mesure près.

D'autres tests ont toutefois été effectués, toutes choses égales par ailleurs, avec des rapports de vitesses d'écoulement moyennes entre l'étape a) et l'étape c) différents, tout en maintenant bien entendu la vitesse moyenne à une valeur assurant un écoulement de type visco-inertiel au cours de l'étape a) et à une valeur assurant un écoulement de type visco-capillaire au cours de l'étape c). Il a alors pu être constaté qu'un rapport de 3,3 environ (que l'on peut qualifier d'optimal) et plus largement compris entre 2,5 et 4 (en prenant notamment dûment en compte les marges d'erreurs liées à la détermination de la vitesse) entre la vitesse moyenne de l'écoulement visco-inertiel de l'étape a) et la vitesse moyenne de l'écoulement visco-capillaire de l'étape c), permettait d'obtenir un débit moyen maximisé.

Ce rapport optimal a pu être constaté pour de nombreuses valeurs de la vitesse moyenne de l'écoulement au cours de l'étape a).

Un conduit submillimétrique de 300 microns de diamètre a aussi été testé. Toutes les autres caractéristiques et conditions de fonctionnement ont été conservées. Là également, il a pu être constaté qu'un rapport optimal de 3,3 environ, et plus largement compris entre 2,5 et 4, entre la vitesse moyenne de l'écoulement visco-inertiel de l'étape a) et la vitesse moyenne de l'écoulement visco-capillaire de l'étape c), permettait d'obtenir un débit moyen maximisé.

Là également, ce rapport optimal a pu être constaté pour de nombreuses valeurs de la vitesse moyenne de l'écoulement visco-inertiel de l'étape a).

Pour exemple, pour une vitesse moyenne d'écoulement au cours de l'étape a) de 0,56 m/s, le débit moyen maximal, en l'occurrence de 0,8 µL/s, a été obtenu pour une vitesse moyenne au cours de l'étape c) de 0,17 m/s. Cé débit moyen de 0,8 µL/s est estimé de la même façon que le débit moyen de 0,5 µL/s obtenu avec l'exemple où l'étape a) est effectuée avec un écoulement de vitesse moyenne de 0,4 m/s dans le conduit submillimétrique et l'étape c) avec un écoulement de vitesse moyenne de 0,04 m/s, soit un rapport de 10. Autrement dit, le rapport α= Q_{LM}/Q_{LNM} vaut l'unité. En pratique, on a choisi de déterminer le débit moyen Q_{LM} de la phase mouillante - lequel est déterminé par rapport au conduit submillimétrique dans lequel le premier liquide, plus mouillant que le deuxième liquide, s'écoule.

Des constatations identiques ont été faites avec un conduit submillimétrique de 500 microns de diamètre, toutes choses égales par ailleurs, ce qui permet de généraliser les constatations faites pour des diamètres bien différents du conduit submillimétrique (300, 500 et 750 microns).

Ceci est particulièrement intéressant en vue d'une application industrielle car il apparaît donc qu'indépendamment du diamètre du conduit submillimétrique, il est d'intérêt que le rapport de la vitesse moyenne d'écoulement au cours de l'étape a) soit 2,5 à 4 fois supérieure à la vitesse moyenne d'écoulement au cours de l'étape c).On notera que la valeur du débit moyen maximal augmente avec la valeur de la vitesse moyenne d'écoulement visco-inertiel de l'étape a).

## Revendications

1. Procédé d'extraction liquide-liquide à contre-courant dans un conduit submillimétrique, le procédé comprenant les étapes suivantes mises en œuvre à partir d'un train de gouttes liquides initial dans le conduit, ledit train étant composé d'une alternance de gouttes d'un premier liquide (LM) et de gouttes d'un deuxième liquide (LNM) moins mouillant que le premier liquide et non miscible avec le premier liquide, l'un des deux liquides comportant un composant à extraire vers l'autre des deux liquides :
a) appliquer un premier gradient de pression le long du conduit de sorte à générer un écoulement visco-inertiel déplaçant un premier volume de train de gouttes selon ledit premier gradient et générant un film de premier liquide s'étant déplacé selon le sens opposé audit premier gradient, le film étant situé entre les gouttes de deuxième liquide et le conduit ;
b) stopper l'application du premier gradient de pression ;
c) appliquer un deuxième gradient de pression le long du conduit, en sens opposé au premier gradient de pression appliqué à l'étape a) de sorte à générer un écoulement visco-capillaire déplaçant un deuxième volume de train de gouttes selon ledit deuxième gradient ; et
d) stopper l'application du deuxième gradient de pression.

2. Procédé selon la revendication 1, **caractérisé en ce qu'**on débute l'étape d) lorsque le deuxième volume de train de gouttes déplacé pendant l'étape c) égale le premier volume de train de gouttes déplacé pendant l'étape a).

3. Procédé selon l'une des revendications précédentes, **caractérisé en ce qu'**on répète N₁ fois les étapes a) à d), avec N₁ un entier naturel supérieur ou égal à l'unité.

4. Procédé selon l'une des revendications précédentes, **caractérisé en ce que** le train de gouttes est régulier.

5. Procédé selon l'une des revendications précédentes, où à l'issue de l'étape d), les étapes a) à d) ayant été répétées avantageusement N₁ fois, un volume de premier liquide est localisé à l'une des extrémités du conduit, **caractérisé en ce qu'**il comprend alors les étapes suivantes :
A) soutirer du conduit le volume de premier liquide par l'extrémité de conduit où ledit volume est localisé ;
B) générer un train de gouttes liquides dans le conduit par l'extrémité de conduit par laquelle le volume de premier liquide a été soutiré à l'étape A), ledit train étant composé d'une alternance d'une goutte du premier liquide (LM) et d'une goutte du deuxième liquide (LNM).

6. Procédé selon la revendication précédente, **caractérisé en ce qu'**à l'issue de l'étape B), il comprend une étape C) consistant à mettre en œuvre les étapes a) à d).

7. Procédé selon la revendication précédente, **caractérisé en ce qu'**on répète N₂ fois l'étape C), avec N₂ un entier naturel supérieur ou égal à l'unité.

8. Procédé selon l'une des revendications 5 à 7, **caractérisé en ce qu'**on répète N₃ fois les étapes A) et B), avec N₃ un entier naturel supérieur ou égal à l'unité.

9. Procédé selon l'une des revendications 6 à 8, **caractérisé en ce que** le train de gouttes généré à l'étape B) est régulier.

10. Procédé selon l'une des revendications précédentes, **caractérisé en ce qu'**un rapport entre une vitesse moyenne de l'écoulement visco-inertiel de l'étape a) et une vitesse moyenne de l'écoulement visco-capillaire de l'étape c) est compris entre 2,5 et 4.

## Patentansprüche

1. Verfahren zur Flüssig-Flüssig-Extraktion im Gegenstrom in einer Submillimeter-Leitung, wobei das Verfahren die folgenden Schritte umfasst, die ausgehend von einer anfänglichen Flüssigkeitstropfenfolge in der Leitung durchgeführt werden, wobei die Folge aus einer Abfolge von Tropfen einer ersten Flüssigkeit (LM) und Tropfen einer zweiten Flüssigkeit (LNM) besteht, die weniger benetzend als die erste Flüssigkeit und mit der ersten Flüssigkeit nicht mischbar ist, wobei eine der beiden Flüssigkeiten einen Bestandteil umfasst, der in die andere der beiden Flüssigkeiten extrahiert werden soll:
a) Anlegen eines ersten Druckgradienten entlang der Leitung, um eine viskoträgheitsbehaftete Strömung zu erzeugen, die ein erstes Volumen der Tropfenfolge gemäß dem ersten Gradienten bewegt und einen Film aus einer ersten Flüssigkeit erzeugt, der sich entgegen der Richtung des ersten Gradienten bewegt hat, wobei sich der Film zwischen den Tropfen der zweiten Flüssigkeit und der Leitung befindet;
b) Stoppen des Anlegens des ersten Druckgradienten;
c) Anlegen eines zweiten Druckgradienten entlang der Leitung, entgegengesetzt zum ersten Druckgradienten, der in Schritt a) angelegt wurde, um eine viskokapillare Strömung zu erzeugen, die ein zweites Volumen der Tropfenfolge gemäß dem zweiten Gradienten bewegt; und
d) Stoppen des Anlegens des zweiten Druckgradienten.

2. Verfahren nach Anspruch 1, **dadurch gekennzeichnet, dass** mit Schritt d) begonnen wird, wenn das zweite Volumen der während Schritt c) bewegten Tropfenfolge gleich dem ersten Volumen der während Schritt a) bewegten Tropfenfolge ist.

3. Verfahren nach einem der vorstehenden Ansprüche, **dadurch gekennzeichnet, dass** die Schritte a) bis d) N₁ Mal wiederholt werden, wobei N₁ eine natürliche Zahl größer oder gleich eins ist.

4. Verfahren nach einem der vorstehenden Ansprüche, **dadurch gekennzeichnet, dass** die Tropfenfolge regelmäßig ist.

5. Verfahren nach einem der vorstehenden Ansprüche, wobei nach Abschluss von Schritt d), nachdem die Schritte a) bis d) vorteilhafterweise N₁ Mal wiederholt wurden, ein Volumen einer ersten Flüssigkeit an einem der Enden der Leitung lokalisiert wird, **dadurch gekennzeichnet, dass** es dann die folgenden Schritte umfasst:
A) Abziehen des Volumens der ersten Flüssigkeit aus der Leitung durch das Ende der Leitung, an dem sich das Volumen befindet;
B) Erzeugen einer Flüssigkeitstropfenfolge in der Leitung durch das Ende der Leitung, durch welches das Volumen der ersten Flüssigkeit in Schritt A) abgezogen wurde, wobei die Folge aus einer Abfolge von Tropfen der ersten Flüssigkeit (LM) und Tropfen der zweiten Flüssigkeit (LNM) besteht.

6. Verfahren nach dem vorstehenden Anspruch, **dadurch gekennzeichnet, dass** es nach Abschluss von Schritt B) einen Schritt C) umfasst, der in der Durchführung der Schritte a) bis d) besteht.

7. Verfahren nach dem vorstehenden Anspruch, **dadurch gekennzeichnet, dass** Schritt C) N₂ Mal wiederholt wird, wobei N₂ eine natürliche Zahl größer oder gleich eins ist.

8. Verfahren nach einem der Ansprüche 5 bis 7, **dadurch gekennzeichnet, dass** die Schritte A) und B) N₃ Mal wiederholt werden, wobei N₃ eine natürliche Zahl größer oder gleich eins ist.

9. Verfahren nach einem der Ansprüche 6 bis 8, **dadurch gekennzeichnet, dass** die in Schritt B) erzeugte Tropfenfolge regelmäßig ist.

10. Verfahren nach einem der vorstehenden Ansprüche, **dadurch gekennzeichnet, dass** ein Verhältnis zwischen einer mittleren Geschwindigkeit der visko-trägheitsmäßigen Strömung des Schritts a) und einer mittleren Geschwindigkeit der visko-kapillaren Strömung des Schritts c) im Bereich zwischen 2,5 und 4 liegt.

## Claims

1. A method for counter-current liquid-liquid extraction in a sub-millimetre conduit, the method comprising the following steps implemented from an initial stream of liquid drops in the conduit, said stream being composed of an alternation of drops of a first liquid (LM) and drops of a second liquid (LNM) less wetting than the first liquid and immiscible with the first liquid, one of the two liquids comprising a component to be extracted towards the other of the two liquids:
a) applying a first pressure gradient along the conduit so as to generate a visco-inertial flowing displacing a first volume of drop stream according to said first gradient and generating a film of first liquid having displaced along the opposite orientation to said first gradient, the film being located between the drops of second liquid and the conduit;
b) stopping the application of the first pressure gradient;
c) applying a second pressure gradient along the conduit, in the opposite orientation to the first pressure gradient applied in the step a) so as to generate a viscous-capillary flowing displacing a second volume of drop stream according to said second gradient; and
d) stopping the application of the second pressure gradient.

2. The method according to claim 1, **characterised in that** the step d) is started when the second volume of drop stream displaced during the step c) equals the first volume of drop stream displaced during the step a).

3. The method according to one of the preceding claims, **characterised in that** the steps a) to d) are repeated N₁ times, with N₁ a natural number greater than or equal to the unity.

4. The method according to any of the preceding claims, **characterised in that** the drop stream is regular.

5. The method according to one of the preceding claims, wherein at the end of the step d), the steps a) to d) having been repeated advantageously N₁ times, a volume of first liquid is located at one of the ends of the conduit, **characterised in that** it then comprises the following steps:
A) withdrawing the volume of first liquid from the conduit through the conduit end where said volume is located;
B) generating a stream of liquid drops in the conduit through the conduit end through which the volume of first liquid was withdrawn in the step A), said stream consisting of an alternation of a drop of the first liquid (LM) and a drop of the second liquid (LNM).

6. The method according to the preceding claim, **characterised in that**, after the step B), it comprises a step C) consisting of implementing the steps a) to d).

7. The method according to the preceding claim, **characterised in that** the step C) is repeated N₂ times, with N₂ a natural number greater than or equal to the unity.

8. The method according to one of claims 5 to 7, **characterised in that** the steps A) and B) are repeated N₃ times, with N₃ a natural number greater than or equal to the unity.

9. The method according to any of claims 6 to 8, **characterised in that** the drop stream generated in the step B) is regular.

10. The method according to any of the preceding claims, **characterised in that** a ratio between an average velocity of the visco-inertial flowing of the step a) and an average velocity of the visco-capillary flowing of the step c) is between 2.5 and 4.
